# EUROPEAN PATENT APPLICATION

(11) **EP 2 000 719 A1**
(43) Date of publication of application: **10.12.2008**
(21) Application number: 08151398.8
(22) Date of filing: 14.02.2008
(51) Int. Cl.: F16K 31/00, F16K 35/02

(54) **Thermally activated pressure relief device with shape memory effect material**

(30) Priority: 04.06.2007 EP 07109508
(71) Applicant: LUXEMBOURG PATENT COMPANY S.A., 7440 Lintgen (LU)
(72) Inventor: Becker, Daniel, 54332 Wasserliesch (DE); Andreas, Thomas, 54441 Temmels (DE)
(74) Representative: Lecomte, Didier

(57) **Abstract**

The prevent invention is directed to a thermally activated pressure relief device for pressurized gas and which uses a shape memory effect material element for triggering the pressure relief. It comprises an elongate device (1, 2) body with a gas inlet and a gas outlet and a passageway (9, 10) there between. A closure element 3 is received in the device body in order to shut off the passageways between the gas outlet and inlet. The closure element 3 is slidable along the longitudinal axis of the device. The upper part of the closure element 3 has negative locking means (5; 6) interacting with the device body in order to hold the closure element in its lower closed position. An elongate shape memory effect material element 7 is arranged along the longitudinal axis of the device and its lower portion engages with the negative locking means in order to hold them in engagement with the device body. When the temperature of the element 7 reaches the threshold temperature of the memory effect material, it shortens such that its lower portion disengages from the locking means and releases the locking means thereby allowing the closure element 3 to move upwardly and relief the pressurized gas.

## Description

### Technical Field

The present invention is directed to a thermally activated pressure relief device, in particular for pressurized gas tanks or vessels like hydrogen vessels used in vehicles, using a shape memory effect material which deforms upon reaching a threshold temperature.

### Background Art

A pressure relief device that is thermally triggered by a shaped memory alloy element is known from US 5788212 B04.08.1998 . It discloses essentially two embodiments, a first one where the shape memory element or an elongated element mechanically linked thereto is in direct contact with the closure element of the pressure relief device and a second one where the shape memory element or an elongated element mechanically linked thereto is in contact with an intermediate element shaped as a plunger retaining the closure element. In both cases, the shape memory element shortens upon heating so that its end portion or the end portion of the elongated element mechanically linked to the shape memory element retracts from its contact with the closure element or with the plunger and thereby stops retaining the closure element in its closed position.

This arrangement has several drawbacks. Indeed, the pressure in the vessel exerts a shearing stress on the end of the end portion of the shape memory element or of the elongated element mechanically linked thereto via the closure element or the intermediate plunger. This can lead to high friction forces and hinder a proper functioning of the system. Additionally, there is no provision for an easy operation of closing back the device after trigger or for manually triggering the device.

### Disclosure of Invention

The present invention seeks to provide an improved pressure relief device which solves at least one of the above mentioned problems or drawbacks.

The invention provides a thermally activated pressure relief device comprising: a valve body with a passageway and a closure element, said closure element being movable with respect to said valve body along its longitudinal axis between an open position and a closed position of said passageway; a shape memory effect element designed for releasing said closure element from a closed position when reaching a threshold temperature; negative locking means designed to hold said closure element in a closed position by negatively engaging with said valve body or said closure element, said negative engagement being maintained by said shape memory effect element until it reaches a threshold temperature; and wherein said locking means comprise at least two laterally movable elements which are held engaged with said valve body or said closure element by a first portion of said shape memory effect element interposed between said movable elements and which disengage from said valve body or said closure element when said first portion of said shape memory effect element disengage from said locking means when the temperature of said shape memory effect element reaches said threshold temperature.

Preferably said shape memory effect element is an elongate element arranged along the longitudinal axis of said device.

Preferably said shape memory effect element is freely engaged in said body and has a second portion in thrust engagement with said body along said longitudinal axis and in the direction opposite to the direction of opening of said movable body.

Preferably said shape memory effect element shortens when reaching said threshold temperature such that said first portion is withdrawn from and releases said locking means.

Said shape memory effect element can be pulled out from engagement with the locking means, preferably by means exterior to the device body.

In a preferred embodiment said exterior means comprise a lever arranged at the exterior of said body, preferably along said body in its rest position, such that its actuation has for effect to pull said shape memory effect element and to open said device.

In a preferred embodiment said locking means comprise at least two balls arranged in one or more lateral passageways in said closure element, said balls engaging with a shoulder portion of said body in the normally closed position of said device.

In a preferred embodiment said first portion of said shape memory effect element is in contact with said balls to maintain a minimum distance between them so that they engage with said shoulder portion of said body and hold said closure element in its closed position.

Preferably said first portion of said shape memory effect element engages an opening in said closure element intersecting said passageway(s).

Said locking means can comprise at least two flexible members arranged on said closure element parallel to said longitudinal axis and negatively engaging with a corresponding surface of said body.

Preferably said first portion of said shape memory effect element is in contact with said flexible members to maintain a minimum distance between them so that they engage with said corresponding surface of said body and hold said closure element in its closed position.

The present invention has many advantages over the know pressure relief devices:

The device cannot be put in service when the shape memory effect element is not correctly in place since the device would open immediately under the gas pressure. This reduces the risk of putting a device in service which would not be able to relieve the pressure in case of high temperature like fire.

Due to its conception, the device can be easily manually triggered and manually restored in its closed position.

Due to the improved locking concept, the friction forces acting in the trigger mechanism are much reduced, thereby improving the reliability and accuracy of the device. The selected shape memory effect material does not need to change its form by the highest factor available but rather only a shortening of only a few percents suffices to release the lower portion of the element from the locking mechanism.

In case of triggering of the device, putting back the elongate element is easier since it does not require opening or dismounting the device.

Additional aspects and advantages of the invention are apparent in the detailed description of the modes for carrying the invention.

### Brief Description of Figures in the Drawings

Figure 1 generally discloses a first embodiment of the present invention.

Figure 1 (a) is a perspective view of the first embodiment.

Figure 1 (b) shows a first orthogonal view of the first embodiment.

Figure 1 (c) is a sectional view A-A of figure 1(b).

Figure 1 (d) is a sectional view B-B of figure 1(c).

Figure 1 (e) is a sectional view A-A of figure 1(b) in the open state.

Figure 1 (f) is an enlarged view of the closure element and the locking means.

Figure 2 generally discloses a second embodiment of the present invention.

Figure 2 (a) is a perspective view of the second embodiment.

Figure 2 (b) shows a first orthogonal view of the second embodiment.

Figure 2 (c) is a sectional view A-A of figure 2(b).

Figure 2 (d) is a sectional view B-B of figure 2(c).

Figure 2 (e) is a sectional view A-A of figure 2(b) in the open state.

Figure 2 (f) is an enlarged view of the closure element and the locking means.

### Mode(s) for Carrying Out the Invention

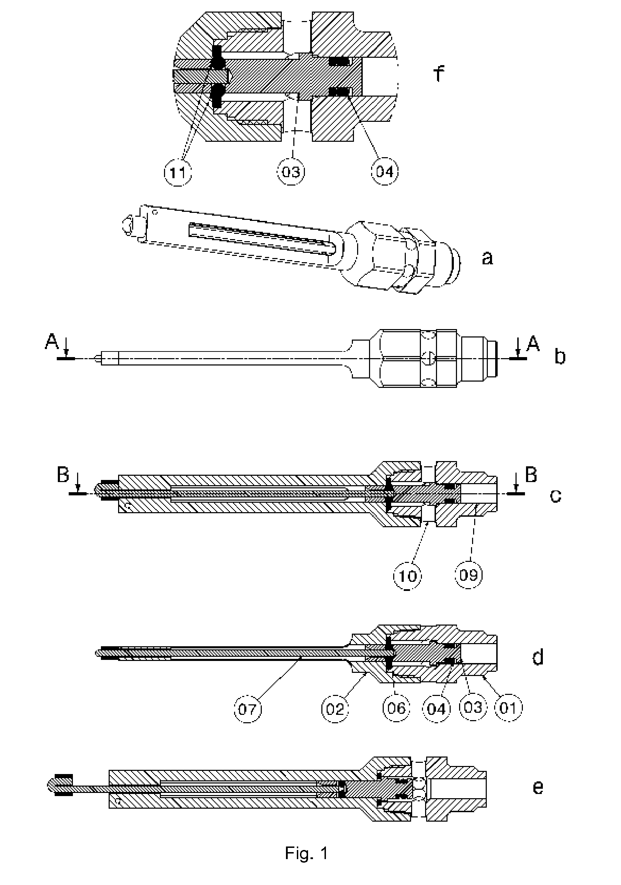

The thermally activated pressure relief device of figures 1 (a)-(f) is a first embodiment of the present invention. The body of the device comprises an elongate upper body element 2 and a lower body element 1 which is screwed in the upper one. A closure element 3 with sealing means is slidably received in a first passageway 9 of the lower body element 1. This first passageway corresponds to the inlet of the device. A second passageway 10 is formed transversally to the first one thereby creating the outlet or exit of the device. When the device is connected to a vessel with pressurized gas, the closure element 3 is biased upwardly and is held in its closed position by locking means. These locking means comprise a series of balls 6, preferably 4, arranged in a series of transversal passageways formed in the closure element 3. An elongate shape memory effect element 7 is received in the upper elongate body element 1. The lower end portion of this shape memory effect element 7 is received in the upper part of the closure element 3 and is in contact with the series of balls 6. The balls, the lower end portion of the shape memory effect element and the closure element are designed such that the balls protrude from the outer surface of the closure element enough that they engage with a shoulder portion 11 of the upper body element 1, thereby locking the closure element 3 in its lower and closed position.

The elongate shape memory effect element 7 has a stable length until reaching a threshold temperature of the order of 100°C for example. When reaching this temperature (for example 110°C with a tolerance of 10°C), the element shortens substantially, typically in the range of 2 to 8%. The following commercially available shape memory alloys can be used: NiTi (nickel-titan), NiTiPt (nickel-titan-platinium), mono-crystalline CuAlNi (copper-aluminium-nickel). The typical length variation for such a material with a length of 80mm is of about 2-3 mm. A typical shape of such an element is a pin of 80mm in length and 2mm in diameter.

The upper portion of this element is enlarged, for example by a section bended by about 180°, to be in thrust engagement with a shoulder portion at the top of the upper body element 2. This means that the elongate shape memory effect element 7 is simply loosely inserted in a guiding means in the upper body 2 and is held in position by the friction force between the lower portion of the element 7 and the balls 6. The pressurized gas exerts indeed an upward vertical force on the closure element 3 and the geometry of the balls 6 protruding from the closure element 3 and the shoulder portion 11 has for effect to convert a part of this force into a horizontal contact force between the balls 6 and the lower portion of the element 7 which tends to bring the balls closer to each other. Additional means preventing any loss of the element 7 in the absence of such friction forces can be considered.

The upper body element 1 is elongate and designed such that at least a section of the shape memory effect material element 7 which is inserted there through is in contact with the exterior of the device, thereby providing an increased sensibility of the device. The shape of the upper body element is essentially a flattened cylinder with openings on the two opposite flat surfaces.

When the temperature of the elongate shape memory effect element 7 reaches the threshold temperature, it shortens and disengages from the balls 6 so that the balls as not more held in their positions where they protrude from the outer surface of the closure element 3. The balls can then come closer to each other and disengage from the shoulder portion 11 of the device body. The closure element 3 is then free to move upwardly under the force of the pressurized gas on its lower surface. In this movement, the elongate shape memory effect element 7 is free to slide upwardly in the upper body element 2 as shown in figure 1 (e). The pressurized gas is then free to flow from the inlet to the outlet of the device.

The locking means comprising the series of balls interacting with the shoulder portion of the body are said to be negative in that the contact surfaces generate forces with tend to displace the movable elements of the locking means in disengagement from the other elements. In this specific case, the presence of the lower portion of the element 7 prevents the disengagement by holding the movable parts, i.e. the balls, in place.

Many variations to this embodiment can be considered. Indeed, the number of balls of the locking means can be 3, 4 or more. The construction of the device body in two elements 1 and 2 is merely illustrative. Indeed, other constructions involving less or more body elements are also possible. The shape of the movable body is shown as cylindrical in the first embodiment but could also be different.

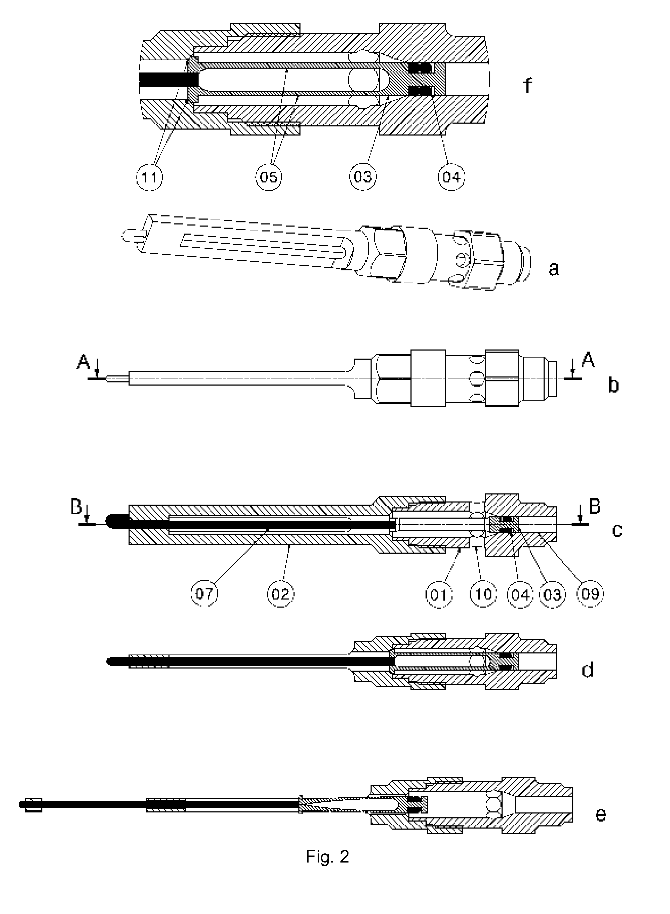

A second embodiment is illustrated in figures 2 (a) - (f). The main difference between this second embodiment and the first one resides in the locking means. Indeed, a wrench mechanism on the closure element 3 replaces the balls mechanism of the first embodiment. A couple of flexible members 5 extend in parallel and symmetrically to the longitudinal axis of the valve body. The members are unitary with the closure element 3 in this specific embodiment but could be also separately fixed or hinged to the closure element 3. These members are relatively elongated in this embodiment but could be designed differently, for example shorter or thicker or there could be three or four members instead of two. Each end of these members has a specific surface interacting with an internal surface 11 of the valve body. These surfaces are inclined at about 45° with regard to the longitudinal axis of the device. The lower portion of the shape memory effect element 7 interacts with the two members by preventing the ends portions of the members from coming closer to each other and the members from bending. The contact angle could also be different as long as it achieves the desired effect.

When the shape memory effect element reaches the threshold temperature, it shortens and disengages from the flexible members 5 and allows them to disengage from the corresponding surfaces of the valve body, thereby allowing the closure element 3 to move upwardly under the force of the pressurized gas in the vessel.

In both embodiments, the device can be triggered by manually pulling the memory effect material element. An external lever can also be arranged in order to manually trigger the device. For example, a lever could be hinged at the top of the upper valve body such that it can lift the shape memory effect element 7 when manipulated.

The lower portion of the elongate shape memory effect element can be hardened or coated to reduce a surface mating and/or friction with the locking mechanism. The element 7 can be made specifically of shape memory effect material but can also be compounded of elements of different materials.

A biasing means like a spring can be arranged in the device to exert a force against the closure element 3 in the closing direction. This would render easier the closing operation when assembling the device or after having triggered the device, for example for test purposes.

The exit of the device can be connected to a pipe which would then conduct the exhaust gas to a specific location instead of diffusing directly around the device.

These two embodiments are merely illustrative and do not specifically restrict the invention. Many variations in the constructions of the present invention are possible.

## Claims

1. A thermally activated pressure relief device comprising:
a valve body (1, 2) with a passageway (9, 10) and a closure element (3), said closure element being movable with respect to said valve body (1, 2) along its longitudinal axis between an open position and a closed position of said passageway;
a shape memory effect element (7) designed for releasing said closure element (3) from a closed position when reaching a threshold temperature; negative locking means (6; 5) designed to hold said closure element in a closed position by negatively engaging with said valve body (1, 2) or said closure element (3), said negative engagement being maintained by said shape memory effect element (7) until it reaches said threshold temperature;
**characterized in that**
said locking means comprise at least two laterally movable elements (6; 5) which are held engaged with said valve body (1, 2) or said closure element (3) by a first portion of said shape memory effect element (7) interposed between said movable elements and which disengage from said valve body (1, 2) or said closure element (3) when said first portion of said shape memory effect element (7) disengages from said locking means when the temperature of said shape memory effect element reaches said threshold temperature.

2. A thermally activated pressure relief device according to the preceding claim, wherein said shape memory effect element (7) is an elongate element arranged along the longitudinal axis of said device.

3. A thermally activated pressure relief device according to the preceding claim, wherein said shape memory effect element (7) is freely engaged in said body and has a second portion in thrust engagement with said body along said longitudinal axis and in the direction opposite to the direction of opening of said movable body.

4. A thermally activated pressure relief device according to the preceding claim, wherein said shape memory effect element (7) shortens when reaching said threshold temperature such that said first portion is withdrawn from and releases said locking means (6; 5).

5. A thermally activated pressure relief device according to the preceding claim, wherein said shape memory effect element (7) can be pulled out from engagement with the locking means (6; 5), preferably by means exterior to the device body.

6. A thermally activated pressure relief device according to the preceding claim, wherein said exterior means comprise a lever arranged at the exterior of said body, preferably along said body in its rest position, such that its actuation has for effect to pull said shape memory effect element (7) and to open said device.

7. A thermally activated pressure relief device according to the preceding claim, wherein said locking means comprise at least two balls (6) arranged in one or more lateral passageways in said closure element (3), said balls (6) engaging with a shoulder portion (11) of said body in the closed position of said device.

8. A thermally activated pressure relief device according to the preceding claim, wherein said first portion of said shape memory effect element (7) is in contact with said balls (6) to maintain a minimum distance between them so that they engage with said shoulder portion (11) of said body and hold said closure element (3) in its closed position.

9. A thermally activated pressure relief device according to the preceding claim, wherein said first portion of said shape memory effect element (7) engages an opening in said closure element (3) intersecting said passageway(s).

10. A thermally activated pressure relief device according to claim 6, wherein said locking means comprise at least two flexible members (5) arranged on said closure element (3) parallel to said longitudinal axis and negatively engaging with a corresponding surface (11) of said body.

11. A thermally activated pressure relief device according to the preceding claim, wherein said first portion of said shape memory effect element (7) is in contact with said flexible members (5) to maintain a minimum distance between them so that they engage with said corresponding surface (11) of said body and hold said closure element (3) in its closed position.
